# EUROPÄISCHE PATENTSCHRIFT

(11) **EP 0 967 138 B1**
(45) Veröffentlichungstag und Bekanntmachung des Hinweises auf die Patenterteilung: **23.04.2003**
(21) Anmeldenummer: 99111354.9
(22) Anmeldetag: 10.06.1999
(51) Int. Cl.: B62D 29/00

(54) **Strukturelement**
Structural frame element
Elément de structure

(30) Priorität: 25.06.1998 DE 19828435
(43) Veröffentlichungstag der Anmeldung: 29.12.1999
(73) Patentinhaber: Delphi Technologies, Inc., Troy, MI 48007 (US)
(72) Erfinder: Büngeler, Jörg, 42489 Wülfrath (DE)
(74) Vertreter: Manitz, Finsterwald & Partner

(56) Entgegenhaltungen:
- EP-A- 0 370 342
- FR-A- 2 436 329
- FR-A- 2 501 571

## Beschreibung

Die Erfindung betrifft ein Strukturelement, insbesondere für Kraftfahrzeugkarosserien, mit zumindest einem Basisteil und wenigstens einem Element aus an das Basisteil angespritztem Kunststoff.

Derartige Strukturelemente sind grundsätzlich bekannt, wie z.B. aus der gattungsbildenden EP 0 370 342 und werden in Verbindung mit den verschiedensten Bauteilen von Kraftfahrzeugen verwendet, z.B. zur Herstellung einer Trägerstruktur für Cockpits.

Es ist das der Erfindung zugrundeliegende Problem (Aufgabe), ein Strukturelement der eingangs genannten Art mit einer möglichst guten Verbindung zwischen dem Basisteil und dem Kunststoffelement zu schaffen.

Die Lösung dieser Aufgabe erfolgt durch die Merkmale des Anspruchs 1.

Bei dem erfindungsgemäßen Strukturelement werden die über das Basisteil in das Kunststoffelement oder umgekehrt eingeleiteten Kräfte über die Länge der linienförmigen Verbindungsstelle verteilt. Dadurch kann das Strukturelement höheren mechanischen Belastungen ausgesetzt werden, ohne daß die Gefahr besteht, daß sich das Basisteil und das Kunststoffelement voneinander lösen. Insbesondere werden durch die erfindungsgemäße linienförmige Kraftübertragung Spannungsspitzen vermieden, die zu Beschädigungen insbesondere des Kunststoffelements führen können.

Des weiteren wird durch die erfindungsgemäße linienförmige Verbindungsstelle zwischen Basisteil und Kunststoffelement eine größere Freiheit bei der Gestaltung des Kunststoffelements geschaffen, was insbesondere dann von Vorteil ist, wenn mehrere Kunststoffelemente an ein oder mehrere Basisteile angespritzt werden sollen.

Die Strangpreßtechnologie ermöglicht es, die linienförmigen Verbindungsstellen in jeder beliebigen Ausgestaltung und an jeder beliebigen Stelle des Basisteils auszubilden. Insbesondere können auf diese Weise Basisteile geschaffen werden, an die beliebig geformte und individuelle Funktionen erfüllende Kunststoffelemente anspritzbar sind. Durch das Vorsehen eines derartigen Haltekanals wird die Oberfläche des Basisteils in vorteilhafter Weise vergrößert, wodurch eine innige Verbindung mit dem Kunststoffelement ermöglicht wird. Des weiteren sorgt der Haltekanal für eine lokale Versteifung des Basisteils genau dort, wo es erforderlich ist, nämlich in dem Bereich, an dem die Krafteinleitung über das Kunststoffelement in das Basisteil oder umgekehrt erfolgt.

Gemäß einer bevorzugten Ausführungsform der Erfindung füllt die Halterippe den Haltekanal zumindest im wesentlichen vollständig aus.

Nach einem weiteren Ausführungsbeispiel der Erfindung ist der Haltekanal zumindest an einer Längsseite von einem vorstehenden Steg des Basisteils begrenzt. Hierdurch wird die Oberfläche des Basisteils noch weiter vergrößert, so daß eine noch bessere Verbindung zwischen dem Basisteil und dem Kunststoffelement ermöglicht wird. Außerdem sorgt der den Haltekanal begrenzende Steg für eine zusätzliche Verstärkung des Basisteils im Bereich der Kraftübertragung zwischen Basisteil und Kunststoffelement.

Durch die erfindungsgemäßen Maßnahmen zur Schaffung einer linienförmigen Verbindungsstelle insbesondere in Form von Haltekanälen für das Kunststoffelement wird das Basisteil folglich nicht geschwächt, sendern im Gegenteil sogar verstärkt.

Ferner ermöglichen es diese Ausführungsformen der Erfindung, Haltekanäle und gegebenenfalls die Haltekanäle begrenzende Stege gezielt an solchen Stellen des Basisteils vorzusehen, die ohnehin einer Verstärkung bedürfen, z.B. an Konturübergangsbereichen des Basisteils.

Gemäß einer weiteren bevorzugten Ausführungsform besteht das Basisteil aus Aluminium.

Nach einem weiteren bevorzugten Ausführungsbeispiel weist der Haltekanal zumindest bereichsweise Hinterschneidungen auf. Auf diese Weise wird eine besonders innige Eingriffsverbindung zwischen dem Basisteil und einem angespritzten Kunststöffelement geschaffen. Spezielle Oberflächenbehandlungen zur Verbesserung der Haftung zwischen Basisteil und Kunststoffelement werden durch das Vorsehen von Hinterschneidungen überflüssig. Ein weiterer Vorteil der Ausbildung von Hinterschneidungen am Haltekanal besteht darin, daß es nicht notwendig ist, das Basisteil mit Durchbrüchen zu versehen, um für ein Ineinandergreifen von Kunststoffelement und Basisteil zu sorgen. Auch werden dadurch scharfe Kanten im Kontaktbereich zwischen Basisteil und Kunststoffelement vermieden.

Gemäß einem weiteren Ausführungsbeispiel der Erfindung sind wenigstens zwei Kunststoffelemente an einer zumindest bereichsweise gemeinsamen linienförmigen Verbindungsstelle mit dem Basisteil verbunden. Bei einem derartigen Strukturelement sind die Kunststoffelemente folglich nicht nur jeweils mit dem Basisteil, sondern zusätzlich auch miteinander an einer linienförmigen Verbindungsstelle verbunden. Die Stabilität und Belastbarkeit des Strukturelements wird auf diese Weise weiter erhöht.

Das der Erfindung zugrundeliegende Problem (Aufgabe) wird des weiteren durch ein Verfahren zum Herstellen eines Strukturelements, insbesondere für Kraftfahrzeugkarosserien, gemäß Anspruch 16 gelöst.

Vorteilhafte Ausgestaltungen sowohl des erfindungsgemäßen Strukturelements als auch des erfindungsgemäßen Verfahrens zu dessen Herstellung sind in den Unteransprüchen, der Beschreibung und der Zeichnung beschrieben.

Nachfolgend wird die vorliegende Erfindung unter Bezugnahme auf die beigefügte Zeichnung beschrieben. Es zeigen:
- Fig. 1: eine perspektivische Teilansicht eines gemäß der Erfindung ausgebildeten Strukturelements,
- Fig. 2: eine Teilansicht entsprechend Fig. 1 einer anderen Ausführungsform eines erfindungsgemäßen Strukturelements, und
- Fig. 3a und 3b: schematische Darstellungen weiterer Ausführungsformen eines Kunststoffelements für ein erfindungsgemäßes Strukturelement.

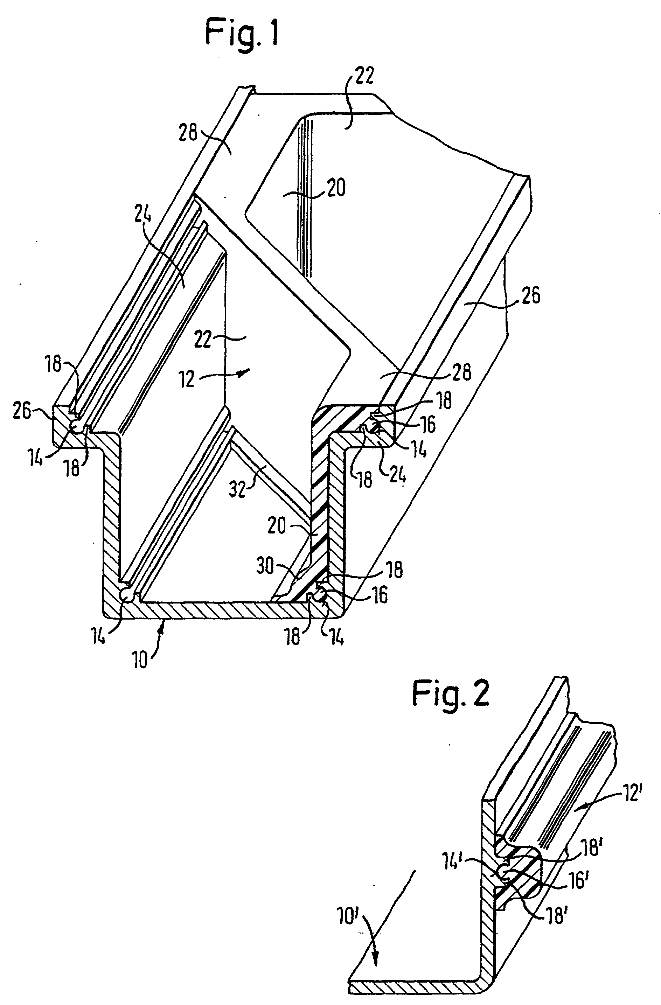

Das erfindungsgemäße Strukturelement gemäß der Ausführungsform von Fig. 1 umfaßt ein Basisteil 10, an das ein Kunststoffelement 12 angespritzt ist. Das vorzugsweise aus Aluminium bestehende Basisteil 10 ist im Strangpreßverfahren hergestellt und trogartig mit rechtwinklig zu einem Bodenabschnitt verlaufenden Seitenwänden ausgebildet.

Die Seitenwände des Basisteils 10 sind an ihrem freien Ende jeweils um etwa 90° nach außen abgewinkelt und bilden einen etwa parallel zum Bodenabschnitt verlaufenden Schulterabschnitt 24 für das Kunststoffelement 12. Die Schulterabschnitte 24 wiederum sind jeweils um etwa 90° nach oben abgewinkelt, so daß sie rechtwinklig zum Bodenabschnitt des Basisteils 10 verlaufen.

Grundsätzlich brauchen die Seitenwände des Basisteils 10 nicht abgewinkelt zu sein oder können in beliebiger, den jeweiligen Anwendungszweck erfüllender Weise ein- oder mehrfach abgewinkelt oder abgerundet sein.

Im Übergangsbereich zwischen den Wandabschnitten 26 und den Schulterabschnitten 24 der Seitenwände sowie zwischen den Seitenwänden und dem Bodenabschnitt des Basisteils 10 sind jeweils Paare von vorstehenden Stegen 18 ausgebildet. Die. Stegpaare 18 begrenzen jeweils einen einseitig offenen Haltekanal 14, der einen etwa kreisförmigen Querschnitt besitzt. Der kürzeste Abstand zwischen den freien Enden der Stegpaare 18, d.h. die Breite der offenen Seite des Haltekanals 14, ist jeweils kleiner als der Durchmesser des Haltekanals 14, so daß die Stege 18 Hinterschneidungen bilden.

Abweichend von der in Fig. 1 dargestellten Ausführungsform des Basisteils 10 kann für jeden Haltekanal auch nur ein vorstehender Begrenzungssteg vorgesehen sein. In diesem Fall wäre der Haltekanal einseitig von dem Wandabschnitt 26 oder dem Schulterabschnitt 24 bzw. von der Seitenwand oder dem Bodenabschnitt des Basisteils 10 begrenzt. Die Haltekanäle können auch ganz ohne Begrenzungsstege in Form von in den jeweiligen Abschnitten des Basisteils ausgebildeten Vertiefungen vorgesehen sein. Bevorzugt sind die Haltekanäle jedoch in jedem Fall mit Hinterschneidungen versehen. Die Haltekanäle können auch einen anderen als kreisförmigen Querschnitt besitzen. Ferner können die Begrenzungsstege der Haltekanäle zur Ausbildung von Hinterschneidungen einoder mehrfach abgewinkelt sein.

Das an das Basisteil 10 angespritzte Kunststoffelement 12 besteht aus abwechselnd im Bereich der einen und der anderen Seitenwand des Basisteils 10 angeordneten Halteabschnitten 20 sowie jeweils zwei aufeinanderfolgende Halteabschnitte 20 miteinander verbindenden Verbindungsabschnitten 22. Die Halteabschnitte 20 verlaufen parallel und die Verbindungsabschnitte 22 schräg unter einem Winkel von etwa 45° zu den Seitenwänden des Basisteils 10, wobei die Halteabschnitte 20 des Kunststoffelements 12 an den Seitenwänden des Basisteils 10 anliegen. Das-Kunststoffelement 12 erstreckt sich über seine gesamte Länge vom Bodenabschnitt bis in Höhe der freien Enden der Seitenwände des Basisteils 10.

Alternativ kann sich das Kunststoffelement 12 auch nur im Bereich der Seitenwände des Basisteils 10 vom Bodenabschnitt bis in Höhe der freien Enden der Seitenwände erstrecken und dazwischen, d. h. im Bereich seiner Verbindungsabschnitte 22, mit einem an die zu erwartenden Beanspruchungen angepaßten Profil versehen sein. Beispielsweise können die Verbindungsabschnitte 22 etwa U-förmig ausgeschnitten sein, wodurch eine erhebliche Gewichtsreduzierung erreicht wird. Grundsätzlich kann das Kunststoffelement mit jedem beliebigen Profil versehen sein, das bei möglichst geringem Gewicht eine ausreichende Stabilität gewährleistet.

Das Kunststoffelement 12 in der Ausführungsform gemäß Fig. 1 ist nach Art einer sich mäanderförmig durch das Basisteil 10 schlängelnden Wand ausgebildet. Das Kunststoffelement bildet auf diese Weise eine Rippenstruktur innerhalb des Basisteils 10, die dafür sorgt, daß ein Strukturelement von hoher Steifigkeit und Festigkeit geschaffen wird, das bei einem großen Volumen ein vergleichsweise geringes Gewicht aufweist.

Beim Anspritzen des Kunststoffelements 12 an das Basisteil 10 werden dessen Haltekanäle 14 an den dafür vorgesehenen Bereichen mit Kunststoff gefüllt. Auf diese Weise entstehen Halterippen 16 des Kunststoffelements 12, die sich mit den Kanälen 14 in Eingriff befinden und folglich linienförmige Verbindungsstellen zwischen dem Basisteil 10 und dem Kunststoffelement 12 schaffen.

Im Bereich seiner Halteabschnitte 20 stützt sich das Kunststoffelement 12 mit einem Auflageabschnitt 28 am Schulterabschnitt 24 und mit einem Fußabschnitt 30 am Bodenabschnitt des Basisteils 10 ab. Auch die Verbindungsabschnitte 22 des Kunststoffelements 12 sind mit sich am Bodenabschnitt des Basisteils 10 abstützenden Fußabschnitten 32 ausgebildet.

Das Kunststoffelement 12 ist somit an die Innenkontur des Basisteils 10 angepaßt und schmiegt sich mit seinen Halteabschnitten 20 an die Seitenwände des Basisteils 10 über deren gesamte Höhe an.

Das Strukturelement gemäß Fig. 1 kann zusätzlich zu dem im Inneren des Basisteils 10 verlaufenden Kunststoffelement 12 an seinen Außenflächen mit erfindungsgemäßen Haltekanälen versehen sein, an die weitere Kunststoffelemente angespritzt werden, wie sie anhand von Fig. 2 beschrieben werden.

In der Ausführungsform eines erfindungsgemäßen Strukturelements gemäß Fig. 2 ist das Basisteil 10' ebenfalls im Strangpreßverfahren hergestellt. Das Basisteil 10' weist an der Außenseite einer Seitenwand einen Haltekanal 14' auf, der entsprechend den Haltekanälen der Ausführungsform von Fig. 1 von zwei vorstehenden Stegen 18' begrenzt ist und Hinterschneidungen zum Eingriff mit einer Halterippe 16' eines angespritzten Kunststoffelements 12' aufweist. Abweichend von der in Fig. 2 dargestellten Ausführungsform können außen an das Basisteil 10' angespritzte Kunststoffelemente jede gewünschte Form aufweisen und beispielsweise zusätzliche Montage- und/oder Anschlagflächen zur Verfügung stellen.

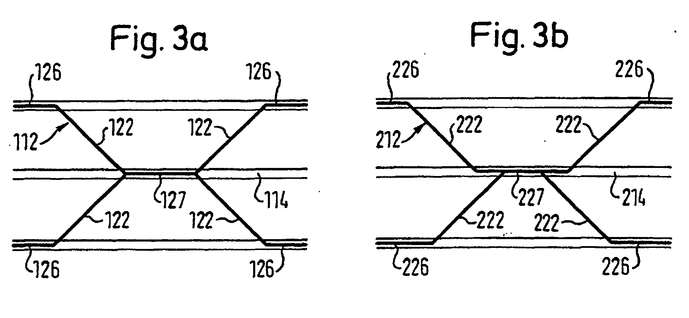

Gemäß den schematischen Darstellungen der Fig. 3a und 3b können die Kunststoffelemente 112, 212 auch derart ausgebildet sein, daß sie sich jeweils mit einem zusätzlichen Haltekanal 114 bzw. 214 in Eingriff befinden, der jeweils mittig am Bodenabschnitt des Basisteils, von dem in den Fig. 3a und 3b nur dessen Haltekanäle angedeutet sind, ausgebildet ist. Die Kunststoffelemente 112, 212 weisen jeweils wenigstens einen zusätzlichen Wandabschnitt 127, 227 auf, der sich parallel zu den Seitenwänden des Basisteils längs des zusätzlichen Haltekanals 114 bzw. 214 erstreckt.

Im Bereich der Seitenwände des Basisteils angeordnete, mit am Basisteil ausgebildeten Haltekanälen in Eingriff befindliche Wandabschnitte 126, 226 des Kunststoffelements 112 bzw. 212 sind jeweils mit dem zusätzlichen Wandabschnitt 127 bzw. 227 durch schräg verlaufende Verbindungsabschnitte 122 bzw. 222 verbunden.

Während sich gemäß Fig. 3a jeweils zwei Verbindungsabschnitte 122 und ein Ende des zusätzlichen Wandabschnitts 127 an einer Stelle treffen, münden gemäß Fig. 3b die Verbindungsabschnitte 222 in den zusätzlichen Wandabschnitt 227 an unterschiedlichen Stellen. Die in Fig. 3a und Fig. 3b gezeigte Struktur des Kunststoffelements 112 bzw. 212 wiederholt sich in der durch die Haltekanäle vorgegebenen Richtung.

In beiden Ausführungsformen können die Verbindungsabschnitte 122, 222 als sich kreuzende Rippen bezeichnet werden, die für eine hohe Stabilität und Belastbarkeit des Strukturelements sorgen. Diese Struktur kann auch als aus zwei Kunststoffelementen bestehend angesehen werden, die an einer gemeinsamen linienförmigen Verbindungsstelle - gemäß Fig. 3a und 3b am zusätzlichen Haltekanal 114 bzw. 214 - mit dem Basisteil verbunden sind.

Grundsätzlich können durch das Vorsehen eines oder mehrerer zusätzlicher Haltekanäle beliebige, beispielsweise gekreuzte Rippenstrukturen sowohl innerhalb als auch außerhalb des Basisteils geschaffen werden, welche die Ausbildung zusätzlicher Wandabschnitte bzw. gemeinsamer linienförmiger Verbindungsstellen ermöglichen.

### Bezugszeichenliste

- 10, 10': Basisteil
- 12, 12': Kunststoffelement
- 14, 14': Haltekanäle
- 16, 16': Halterippen
- 18, 18': Stege
- 20: Halteabschnitte
- 22: Verbindungsabschnitte
- 24: Schulterabschnitte
- 26: Wandabschnitte
- 28: Auflageabschnitte
- 30, 32: Fußabschnitte
- 112, 212: Kunststoffelement
- 114, 214: zusätzlicher Haltekanal
- 122, 222: Verbindungsabschnitte
- 126, 226: Wandabschnitte
- 127, 227: zusätzlicher Wandabschnitt

## Patentansprüche

1. Strukturelement, insbesondere für Kraftfahrzeugkarosserien, mit zumindest einem Basisteil (10, 10') und wenigstens einem Element (12, 12') aus an das Basisteil (10, 10') angespritztem Kunststoff,
**dadurch gekennzeichnet,**
**dass** das Basisteil (10, 10') im Strangpressverfahren hergestellt ist, dass sich das Kunststoffelement (12, 12') mit dem Basisteil (10, 10') an wenigstens einer linienförmigen, insbesondere geradlinigen Verbindungsstelle in Eingriff befindet, und
**dass** das Basisteil (10, 10') wenigstens im Bereich der Verbindungsstelle einen an zumindest einer Längsseite offenen, beim Strangpressen des Basisteils (10, 10') erhaltenen Haltekanal (14, 14') aufweist, der sich wenigstens bereichsweise mit einer Halterippe (16, 16') des Kunststoffelements (12, 12') in Eingriff befindet.

2. Strukturelement nach Anspruch 1,
**dadurch gekennzeichnet, daß**
die Halterippe (16, 16') den Haltekanal (14, 14') zumindest im wesentlichen vollständig ausfüllt.

3. Strukturelement nach Anspruch 1 oder 2,
**dadurch gekennzeichnet,**
**daß** ein Haltekanal (14, 14') zumindest an einer Längsseite von einem vorstehenden Steg (18, 18') des Basisteils (10, 10') begrenzt ist.

4. Strukturelement nach zumindest einem der vorhergehenden Ansprüche,
**dadurch gekennzeichnet,**
**daß** ein Haltekanal (14, 14') einen etwa kreisförmigen Querschnitt aufweist.

5. Strukturelement nach zumindest einem der vorhergehenden Ansprüche,
**dadurch gekennzeichnet,**
**daß** das Basisteil (10, 10') aus Aluminium besteht.

6. Strukturelement nach zumindest einem der vorhergehenden Ansprüche,
**dadurch gekennzeichnet,**
**daß** ein Haltekanal (14, 14') zumindest bereichsweise Hinterschneidungen aufweist.

7. Strukturelement nach zumindest einem der vorhergehenden Ansprüche,
**dadurch gekennzeichnet,**
**daß** das Basisteil (10, 10') trog- oder rinnenartig ausgebildet ist, wobei vorzugsweise die Seitenwände des Basisteils (10, 10') etwa rechtwinklig zu einem Bodenabschnitt des Basisteil (10, 10') verlaufen.

8. Strukturelement nach zumindest einem der vorhergehenden Ansprüche,
**dadurch gekennzeichnet,**
**daß** sich ein Kunststoffelement (12) vorzugsweise mäanderförmig zwischen Seitenwänden des Basisteils (10) erstreckt, wobei vorzugsweise das Kunststoffelement (12) abwechselnd mit der einen und der anderen Seitenwand in Eingriff befindliche Halteabschnitte (20) und jeweils zwei aufeinanderfolgende Halteabschnitte (20) miteinander verbindende Verbindungsabschnitte (22) umfaßt.

9. Strukturelement nach zumindest einem der vorhergehenden Ansprüche,
**dadurch gekennzeichnet,**
**daß** Halteabschnitte (20) des Kunststoffelements (12) etwa parallel zu Seitenwänden des Basisteils (10) verlaufen, und/oder daß Verbindungsabschnitte (22) des Kunststoffelements (12) unter einem Winkel von bevorzugt etwa 45° zu den Seitenwänden und/oder etwa senkrecht zu einem Bodenabschnitt des Basisteils (10) verlaufen.

10. Strukturelement nach zumindest einem der vorhergehenden Ansprüche,
**dadurch gekennzeichnet,**
**daß** sich das Kunststoffelement (12) bevorzugt über seine gesamte Länge von einem Bodenabschnitt bis etwa in Höhe freier Enden von Seitenwänden des Basisteils (10) erstreckt.

11. Strukturelement nach zumindest einem der vorhergehenden Ansprüche,
**dadurch gekennzeichnet,**
**daß** ein Haltekanal (14) im Bereich des Übergangs zwischen einer Seitenwand und einem Bodenabschnitt und/oder im Bereich des freien Endes einer Seitenwand des Basisteils (10) ausgebildet ist.

12. Strukturelement nach zumindest einem der vorhergehenden Ansprüche,
**dadurch gekennzeichnet,**
**daß** zumindest eine Seitenwand des Basisteils (10) im Bereich ihres freien Endes nach außen abgewinkelt ist und bevorzugt einen etwa parallel zu einem Bodenabschnitt des Basisteils (10) verlaufenden Schulterabschnitt (24) sowie einen sich an den Schulterabschnitt (24) anschließenden Wandabschnitt (26) umfaßt, der vorzugsweise etwa rechtwinklig zu einem Bodenabschnitt des Basisteils (10) verläuft.

13. Strukturelement nach zumindest einem der vorhergehenden Ansprüche,
**dadurch gekennzeichnet,**
**daß** ein Haltekanal (14) im Übergangsbereich zwischen einem Schulterabschnitt (24) und einem Wandabschnitt (26) einer Seitenwand des Basisteils (10) ausgebildet ist.

14. Strukturelement nach zumindest einem der vorhergehenden Ansprüche,
**dadurch gekennzeichnet,**
**daß** wenigstens zwei Kunststoffelemente an einer zumindest bereichsweise gemeinsamen linienförmigen Verbindungsstelle mit dem Basisteil verbunden sind.

15. Strukturelement nach zumindest einem der vorhergehenden Ansprüche,
**dadurch gekennzeichnet,**
**daß** wenigstens ein an zumindest einer Längsseite offener Haltekanal (14') an einer Außenfläche einer Seitenwand des Basisteils (10') ausgebildet ist.

16. Verfahren zum Herstellen eines Strukturelements, insbesondere für Kraftfahrzeugkarosserien,
**dadurch gekennzeichnet,**
- **dass** das Basisteil (10, 10') im Strangpressverfahren hergestellt wird,
- **dass** das Basisteil (10, 10') beim Strangpressen mit wenigstens einem an zumindest einer Längsseite offenen Haltekanal versehen wird, und
- **dass** im Spritzgussverfahren wenigstens ein Element (12, 12') aus Kunststoff an das Basisteil (10, 10') angespritzt und dabei der Haltekanal (14, 14') zumindest bereichsweise gefüllt wird, so daß dieses Element mit dem Haltekanal wenigstens bereichsweise in Eingriff steht.

17. Verfahren nach Anspruch 16,
**dadurch gekennzeichnet,**
**daß** das Basisteil (10, 10') und/oder das Kunststoffelement (12, 12') gemäß zumindest einem der Ansprüche 1 bis 15 ausgebildet wird.

## Claims

1. Structure element, in particular for motor vehicle bodies, comprising at least one base part (10, 10') and at least one element (12, 12') of plastic which is moulded onto the base part (10, 10'),
**characterised**
**in that** the base part 10, 10') is manufactured in the extrusion process;
**in that** the plastic element (12, 12') is in engagement with the base part (10, 10') at least at one line-shaped, in particular rectilinear, connection location; and
**in that** the base part (10, 10') has a holding channel (14, 14') at least in the region of the connection location which is open at least at one longitudinal side, which is obtained in the extrusion of the base part (10, 10') and is in engagement with a holding rib (16, 16') of the plastic element (12, 12') at least regionally.

2. Structure element in accordance with claim 1,
**characterised in that**
the holding rib (16, 16') fills out the holding channel (14, 14') at least substantially completely.

3. Structure element in accordance with claim 1 or claim 2,
**characterised in that**
a holding channel (14, 14') is bounded at least at one longitudinal side by a projecting web (18, 18') of the base part (10, 10').

4. Structure element in accordance with at least one of the preceding claims,
**characterised in that**
a holding channel (14, 14') has an approximately circular cross-section.

5. Structure element in accordance with at least one of the preceding claims,
**characterised in that**
the base part (10, 10') consists of aluminium.

6. Structure element in accordance with at least one of the preceding claims,
**characterised in that**
a holding channel (14, 14') has undercuts at least regionally.

7. Structure element in accordance with at least one of the preceding claims,
**characterised in that**
the base part (10, 10') is formed in the shape of a trough or gutter, with the side walls of the base part (10, 10') preferably extending approximately at right angles to a base section of the base part (10, 10').

8. Structure element in accordance with at least one of the preceding claims,
**characterised in that**
a plastic element (12) extends preferably in meander shape between side walls of the base part (10), with the plastic element (12) preferably comprising holding sections (20) which are alternatingly in engagement with the one and the other side wall and connection sections (22) which in each case connect two successive holding sections (20) to one another.

9. Structure element in accordance with at least one of the preceding claims,
**characterised in that**
holding sections (20) of the plastic element (12) extend approximately parallel to the side walls of the base part (10) and/or that connection sections (22) of the plastic element (12) extend at an angle of preferably approximately 45° to the side walls and/or approximately perpendicular to a base section of the base part (10).

10. Structure element in accordance with at least one of the preceding claims,
**characterised in that**
the plastic element (12) preferably extends over its entire length from a base section up to approximately the height of free ends of side walls of the base part (10).

11. Structure element in accordance with at least one of the preceding claims,
**characterised in that**
a holding channel (14) is formed in the region of the transition between a side wall and a base section and/or in the region of the free end of a side wall of the base part (10).

12. Structure element in accordance with at least one of the preceding claims,
**characterised in that**
at least one side wall of the base part (10) is angled off outwardly in the region of its free end and preferably comprises a shoulder section (24) which extends approximately parallel to a base section of the base part (10) and a wall section (26) which adjoins the shoulder section (24) and which preferably extends approximately at right angles to a base section of the base part (10).

13. Structure element in accordance with at least one of the preceding claims,
**characterised in that**
a holding channel (14) is formed in the transition region between a shoulder section (24) and a wall section (26) of a side wall of the base part (10).

14. Structure element in accordance with at least one of the preceding claims,
**characterised in that**
at least two plastic elements are connected to the base part at an at least regionally common line-shaped connection location.

15. Structure element in accordance with at least one of the preceding claims,
**characterised in that**
at least one holding channel (14') which is open at least at one longitudinal side is formed at an outer surface of a side wall of the base part (10').

16. Method for the manufacture of a structure element, in particular for motor vehicle bodies,
**characterised**
- **in that** a base part (10, 10') is manufactured in the extrusion process;
- **in that** the base part (10, 10') is provided with at least one holding channel (14, 14') open at least at one longitudinal side on extrusion; and
- **in that**, in the injection moulding process, at least one element (12, 12') of plastic is moulded onto the base part (10, 10') and the holding channel (14, 14') is filled at least regionally, such that this element is at least region-wise in engagement with the holding channel.

17. Method in accordance with claim 16,
**characterised in that**
the base part (10, 10') and/or the plastic element (12, 12') is formed in accordance with at least one of the claims 1 to 15.

## Revendications

1. Élément structurel, notamment pour des carrosseries de véhicules automobiles, avec au moins une pièce de base (10, 10') et au moins un élément (12, 12') en matière plastique moulé par injection sur la pièce de base (10, 10'),
**caractérisé**
**en ce que** la pièce de base (10, 10') est fabriquée par filage à la presse, en ce que l'élément (12, 12') en matière plastique se trouve en engagement avec la pièce de base (10, 10') sur au moins une zone d'assemblage linéaire, notamment rectiligne,
et **en ce que** la pièce de base (10, 10') présente, au moins dans la région de la zone d'assemblage, un canal de maintien (14, 14') obtenu lors du filage à la presse de la pièce de base (10, 10'), canal qui est ouvert sur au moins un côté longitudinal et qui se trouve au moins partiellement en engagement avec une nervure de maintien (16, 16') de l'élément (12, 12') en matière plastique.

2. Élément structurel selon la revendication 1, **caractérisé en ce que** la nervure de maintien (16, 16') remplit au moins sensiblement totalement le canal de maintien (14, 14').

3. Élément structurel selon la revendication 1 ou 2, **caractérisé en ce qu'**un canal de maintien (14, 14') est délimité au moins sur un côté longitudinal par une barrette saillante (18, 18') de la pièce de base (10, 10').

4. Élément structurel selon au moins une des revendications précédentes, **caractérisé en ce qu'**un canal de maintien (14, 14') présente une section approximativement circulaire.

5. Élément structurel selon au moins une des revendications précédentes, **caractérisé en ce que** la pièce de base (10, 10') est réalisée en aluminium.

6. Élément structurel selon au moins une des revendications précédentes, **caractérisé en ce qu'**un canal de maintien (14, 14') présente au moins sectoriellement des contre-dépouilles.

7. Élément structurel selon au moins une des revendications précédentes, **caractérisé en ce que** la pièce de base (10, 10') est réalisée en forme de bac ou de gouttière, les parois latérales de la pièce de base (10, 10') s'étendant de préférence environ à angle droit d'une partie de fond de la pièce de base (10, 10').

8. Élément structurel selon au moins une des revendications précédentes, **caractérisé en ce qu'**un élément (12) en matière plastique s'étend de préférence en méandres entre des parois latérales de la pièce de base (10), l'élément (12) en matière plastique comprenant de préférence des parties de maintien (20) se trouvant alternativement en engagement avec l'une et l'autre des parois latérales, et des parties de liaison (22) reliant chaque fois entre elles deux parties de maintien successives (20).

9. Élément structurel selon au moins une des revendications précédentes, **caractérisé en ce que** des parties de maintien (20) de l'élément (12) en matière plastique s'étendent environ parallèlement à des parois latérales de la pièce de base (10), et/ou **en ce que** des parties de liaison (22) de l'élément (12) en matière plastique s'étendent sous un angle d'environ 45° de préférence par rapport aux parois latérales, et/ou environ perpendiculairement à une partie de fond de la pièce de base (10).

10. Élément structurel selon au moins une des revendications précédentes, **caractérisé en ce que** l'élément (12) en matière plastique s'étend de préférence sur toute sa longueur depuis une partie de fond jusqu'environ à hauteur des extrémités libres de parois latérales de la pièce de base (10).

11. Élément structurel selon au moins une des revendications précédentes, **caractérisé en ce qu'**un canal de maintien (14) est configuré dans la région de la transition entre une paroi latérale et une partie de fond, et/ou dans la région de l'extrémité libre d'une paroi latérale de la pièce de base (10).

12. Élément structurel selon au moins une des revendications précédentes, **caractérisé en ce qu'**au moins une paroi latérale de la pièce de base (10) est coudée vers l'extérieur dans la région de son extrémité libre, et comprend de préférence une partie d'épaulement (24) s'étendant environ parallèlement à une partie de fond de la pièce de base (10), ainsi qu'une partie de paroi (26) qui fait suite à la partie d'épaulement (24) et qui s'étend de préférence environ à angle droit d'une partie de fond de la pièce de base (10).

13. Élément structurel selon au moins une des revendications précédentes, **caractérisé en ce qu'**un canal de maintien (14) est configuré dans la région de transition entre une partie d'épaulement (24) et une partie de paroi (26) d'une paroi latérale de la pièce de base (10).

14. Élément structurel selon au moins une des revendications précédentes, **caractérisé en ce qu'**au moins deux éléments en matière plastique sont assemblés à la pièce de base sur une zone d'assemblage linéaire au moins partiellement commune.

15. Élément structurel selon au moins une des revendications précédentes, **caractérisé en ce qu'**au moins un canal de maintien (14') ouvert sur au moins un côté longitudinal est configuré sur une face extérieure d'une paroi latérale de la pièce de base (10').

16. Procédé de fabrication d'un élément structurel, notamment pour des carrosseries de véhicules automobiles,
**caractérisé**
- **en ce que** la pièce de base (10, 10') est fabriquée par filage à la presse,
- **en ce que** la pièce de base (10, 10') est pourvue lors du filage à la presse d'au moins un canal de maintien ouvert sur au moins un côté longitudinal,
- et **en ce qu'**au moins un élément (12, 12') en matière plastique est moulé par coulage par injection sur la pièce de base (10, 10') et le canal de maintien (14, 14') est alors au moins partiellement rempli, de sorte que cet élément se trouve au moins partiellement en engagement avec le canal de maintien.

17. Procédé selon la revendication 16, **caractérisé en ce que** la pièce de base (10, 10') et/ou l'élément (12, 12') en matière plastique est configuré selon au moins une des revendications 1 à 15.
